# FASCICULE DE BREVET EUROPEEN

(11) **EP 3 282 104 B1**
(45) Date de publication et mention de la délivrance du brevet: **29.05.2019**
(21) Numéro de dépôt: 17179631.1
(22) Date de dépôt: 04.07.2017
(51) Int. Cl.: F01M 11/12, F01D 25/18, F02C 7/06, G01F 23/26

(54) **RESERVOIR D'HUILE DE TURBOMACHINE AVEC MESURE DE NIVEAU**
ÖLTANK EINER TURBOMASCHINE MIT FÜLLSTANDMESSUNG
OIL TANK FOR A TURBOMACHINE WITH LEVEL MEASUREMENT

(30) Priorité: 11.08.2016 BE 201605632
(43) Date de publication de la demande: 14.02.2018
(73) Titulaire: Safran Aero Boosters SA, 4041 Herstal (BE)
(72) Inventeur: RAIMARCKERS, Nicolas, 4263 Tourinne (Braives) (BE); VALLINO, Frédéric, 4100 Seraing (BE); GIORDANO, Giuseppe, 4460 Grâce-Hollogne (BE)
(74) Mandataire: Lecomte & Partners

(56) Documents cités:
- EP-A1- 0 610 050
- DE-B- 1 250 146
- GB-A- 2 086 054
- US-A- 4 782 698
- US-B1- 6 297 733

## Description

### Domaine technique

L'invention traite de la mesure du niveau de liquide dans un réservoir de turbomachine. L'invention propose également une turbomachine axiale, notamment un turboréacteur d'avion ou un turbopropulseur d'aéronef, comportant un réservoir. L'invention propose en outre un procédé de réalisation de réservoir.

### Technique antérieure

Un turboréacteur utilise de l'huile pendant son fonctionnement. Ce fluide est utilisé pour la lubrification, mais également pour des échanges thermiques. Par échanges thermiques, on entend à la fois le refroidissement de certains composants tout comme le réchauffement de plusieurs zones sujettes au givrage. En outre, l'huile peut être pressurisée dans le but d'actionner des vérins hydrauliques.

Ce fluide jouant un rôle crucial, sa qualité doit être préservée et sa quantité disponible dans le turboréacteur doit être mesurée précisément. Afin de répondre à ce dernier impératif, le réservoir d'huile présente couramment une fenêtre de visualisation du niveau de liquide stocké. Elle comprend une vitre transparente permettant un contrôle interne du réservoir par simple vérification visuelle.

La demande de brevet US 2015/0260563 A1 propose un réservoir pour avion comportant un dispositif de visualisation directe du niveau d'huile et un capteur électronique indépendant. Ce capteur indépendant peut fonctionner automatiquement par mesure de la capacitance de l'huile contenue dans le réservoir. Toutefois ce capteur indépendant, bien que permettant une meilleur corrélation de la mesure du niveau d'huile dans le réservoir avec le dispositif de visualisation directe, occupe un certain volume à l'intérieur du réservoir. Par ailleurs son installation à l'intérieur du volume de stockage reste complexe.

En outre pour maintenir le capteur indépendant dans le réservoir, des moyens de fixation spécifiques sont ajoutés. Ces moyens de fixations peuvent comporter des pions coopérant avec des alésages traversant ; ou encore comporter des soudures. Puisqu'il faut garantir l'étanchéité dans des conditions extrêmes, des mesures complémentaires sont requises. Par ailleurs, des contrôles d'étanchéité et de qualité complexes s'imposent.

Le document DE 1 250 146 B divulgue un réservoir ayant une chambre intérieure et un dispositif capacitif de mesure de niveau.

### Résumé de l'invention

### Problème technique

L'invention a pour objectif de résoudre au moins un des problèmes posés par l'art antérieur. Plus précisément, l'invention a pour objectif de simplifier la réalisation d'un réservoir avec un dispositif de mesure du niveau. L'invention a également pour objectif de proposer une solution résistante, légère, économique, fiable, facile à produire, commode d'entretien, et d'inspection aisée.

### Solution technique

L'invention a pour objet un réservoir de turbomachine, le réservoir étant destiné à contenir un liquide de la turbomachine, notamment pour huile, le réservoir comprenant : une chambre intérieure destinée à contenir le liquide du réservoir ; une paroi avec une surface interne entourant la chambre intérieure ; et un dispositif capacitif de mesure de niveau du liquide ; remarquable en ce que le dispositif comprend deux électrodes formant au moins partiellement la surface interne et destinées à être en contact électrique du liquide de sorte à en mesurer le niveau.

Selon un mode avantageux de l'invention, les deux électrodes s'étendent parallèlement sur la majorité ou sur sensiblement toute la hauteur de la chambre intérieure.

Selon un mode avantageux de l'invention, la surface interne présente une portion délimitée par les deux électrodes ; ladite portion s'étendant majoritairement verticalement.

Selon un mode avantageux de l'invention, le réservoir comprend un secteur angulaire renfermant la ou chaque électrode du dispositif, l'angle α du secteur angulaire étant inférieur ou égal à 90°, ou à 45°, ou à 30°.

Selon un mode avantageux de l'invention, le réservoir comprend une couche électriquement isolante isolant la paroi de la ou de chaque électrode.

Selon un mode avantageux de l'invention, la chambre intérieure comprend un fond et un sommet, la ou chaque électrode étant à distance verticalement du fond et/ou du sommet.

Selon un mode avantageux de l'invention, la paroi comprend une soudure autour de la chambre intérieure.

Selon un mode avantageux de l'invention, le réservoir comprend une portion inférieure et/ou une portion supérieure séparée de la ou de chaque électrode par une soudure.

Selon un mode avantageux de l'invention, la paroi comprend une tôle formant un compartiment généralement cylindrique dans lequel est disposée la ou chaque électrode.

Selon un mode avantageux de l'invention, l'épaisseur de la ou de chaque électrode est inférieure ou égale à 1,00 mm, ou à 0,20 mm, ou à 0,05 mm.

Selon un mode avantageux de l'invention, la surface interne est divisée par une ou plusieurs soudures.

Selon un mode avantageux de l'invention, la ou chaque électrode est isolée électriquement de la paroi, notamment en l'absence de liquide à l'intérieur du réservoir.

Selon un mode avantageux de l'invention, les deux électrodes sont parallèles.

Selon un mode avantageux de l'invention, la ou chaque électrode est d'épaisseur et/ou de largeur constante.

Selon un mode avantageux de l'invention, la surface interne forme une boucle fermée au niveau de la ou chaque électrode, éventuellement sur toute la hauteur de la ou des électrodes.

Selon un mode avantageux de l'invention, la surface interne est incurvée, et/ou comprend une double courbure au niveau de la ou des électrodes.

Selon un mode avantageux de l'invention, la ou chaque électrode est arquée selon sa direction principale.

Selon un mode avantageux de l'invention, la paroi est réalisée en un matériau métallique ou en un isolant électrique.

Selon un mode avantageux de l'invention, la ou chaque électrode s'étend principalement verticalement.

Selon un mode avantageux de l'invention, la ou chaque électrode forme un ruban, éventuellement le ou chaque ruban comprend deux bords parallèles continus et verticaux.

Selon un mode avantageux de l'invention, la ou chaque électrode s'étend sur la majorité de la hauteur du réservoir.

Selon un mode avantageux de l'invention, la paroi comprend une soudure verticale, et/ou une soudure horizontale, et/ou au moins une soudure circulaire.

Selon un mode avantageux de l'invention, la paroi est venue de matière, ou la portion de paroi recevant la ou chaque électrode est venue de matière.

Selon un mode avantageux de l'invention, la ou chaque électrode est appliquée ou plaquée contre la paroi.

Selon un mode avantageux de l'invention, la paroi est réalisée en un matériau différent du ou des matériaux de la ou de chaque électrode.

Selon un mode avantageux de l'invention, la ou chaque électrode est portée et/ou appliquée contre la paroi ; et/ou en contact de la paroi.

Selon un mode avantageux de l'invention, la ou chaque couche électriquement isolante est en contact de la paroi et de la ou de chaque électrode.

Selon un mode avantageux de l'invention, le réservoir présente une continuité de matière à l'interface entre la paroi et la ou chaque électrode.

Selon un mode avantageux de l'invention, le réservoir présente une épaisseur ou des épaisseurs constante(s) au niveau de la ou de chaque électrode.

Selon un mode avantageux de l'invention, la paroi et la ou chaque électrode forme un ou plusieurs laminé(s), éventuellement en combinaison de la ou des ou de chaque couche isolante.

L'invention a également pour objet une turbomachine comprenant un circuit de lubrification avec un réservoir d'huile, remarquable en ce que le réservoir est conforme à l'invention.

Selon un mode avantageux de l'invention, le dispositif est adapté pour mesurer la capacité électrique du fluide à l'aide de la ou de chaque électrode.

Selon un mode avantageux non revendiqué, le dispositif capacitif est configuré pour s'adapter à une présence de gaz dans l'huile et/ou à une présence de particules solides dans l'huile.

Selon un mode avantageux de l'invention, le circuit d'huile comprend un module de détection de particules solides dans l'huile.

Selon un mode avantageux de l'invention, le module de détection de particules est configuré pour estimer la quantité de particules dans le réservoir, le dispositif capacitif fournissant une mesure de niveau en fonction de la quantité de particules estimée.

Selon un mode avantageux de l'invention, la turbomachine comprend une chambre de combustion.

L'invention a également pour objet un procédé de réalisation d'un réservoir de turbomachine, notamment d'un réservoir d'huile, le procédé comprenant les étapes suivantes : (a) réalisation d'une paroi de réservoir formant au moins partiellement une chambre intérieure destinée à renfermer un liquide ; remarquable en ce que le procédé comprend en outre une étape (b) impression d'une électrode de dispositif capacitif de mesure du niveau du liquide contre la paroi du réservoir ; le réservoir étant conforme à l'une des revendications 1 à 7.

Selon un mode avantageux de l'invention, lors de l'étape (a) réalisation, la paroi est réalisée au moins partiellement par fabrication additive par couches, notamment à base de poudre.

Selon un mode avantageux de l'invention, l'étape (b) impression utilise une encre électriquement conductrice, notamment avec des pigments électriquement conducteurs.

Selon un mode avantageux de l'invention, la ou chaque électrode comprend du cuivre et/ou de l'argent, et/ou du nickel et/ou de platine, et/ou un oxyde de graphène, et/ou un oxyde de graphite, et/ou des polymères organiques.

Selon un mode avantageux de l'invention, les étapes (a) réalisation et (b) impression sont réalisées simultanément.

Selon un mode avantageux de l'invention, le procédé comprend en outre une étape (c) soudure de la paroi.

Selon un mode avantageux de l'invention, le procédé comprend en outre une étape (d) usinage du réservoir, par exemple à distance ou à l'opposé de la ou de chaque électrode.

Selon un mode avantageux de l'invention, le procédé comprend en outre une étape (e) branchement électrique de la ou de chaque électrode en dehors du réservoir.

De manière générale, les modes avantageux de chaque objet de l'invention sont également applicables aux autres objets de l'invention. Dans la mesure du possible, chaque objet de l'invention est combinable aux autres objets. Les objets de l'invention sont également combinables aux modes de réalisation.

### Avantages apportés

L'invention simplifie l'intégration des électrodes. En effet, ces dernières sont reçues par la paroi qui forme alors leur support d'installation. En outre, leur position ne limite pas significativement le volume interne du réservoir, et ne forme pas d'obstacle bloquant l'introduction de divers équipements dans la chambre intérieure.

L'assemblage tout comme la fabrication de chaque portion du réservoir reste aisée. La présence des électrodes contre la paroi peut être automatisée, et les contrôles correspondant demeurent aisés. Ceci découle du fait que les électrodes peuvent être placées dans le réservoir alors qu'il reste dans une configuration ouverte ; c'est-à-dire lorsque ses différentes portions sont séparées. Donc l'accessibilité de la chambre intérieure est optimale ; quelle que soit la taille du goulot recevant le bouchon.

Le présent mode d'intégration des électrodes permet d'augmenter leur taille sans être confronté aux contraintes géométriques du réservoir. Dès lors, le coût propre des électrodes diminue. En parallèle, la précision de mesure s'accroît.

### Brève description des dessins

La figure 1 représente une turbomachine axiale avec un réservoir selon l'invention.
La figure 2 esquisse un réservoir de turbomachine selon l'invention.
La figure 3 illustre une coupe du réservoir suivant l'axe 3-3 tracé en figure 2.
La figure 4 illustre un diagramme d'un procédé de réalisation d'un réservoir selon l'invention.

### Description des modes de réalisation

Dans la description qui va suivre, la direction axiale correspond à la direction le long de l'axe de rotation de la turbomachine. La direction radiale est perpendiculaire à l'axe de rotation. L'amont et l'aval sont en référence au sens d'écoulement principal du flux dans la turbomachine. La hauteur et l'aspect vertical sont considérés pour le réservoir dans le sens normal de montage.

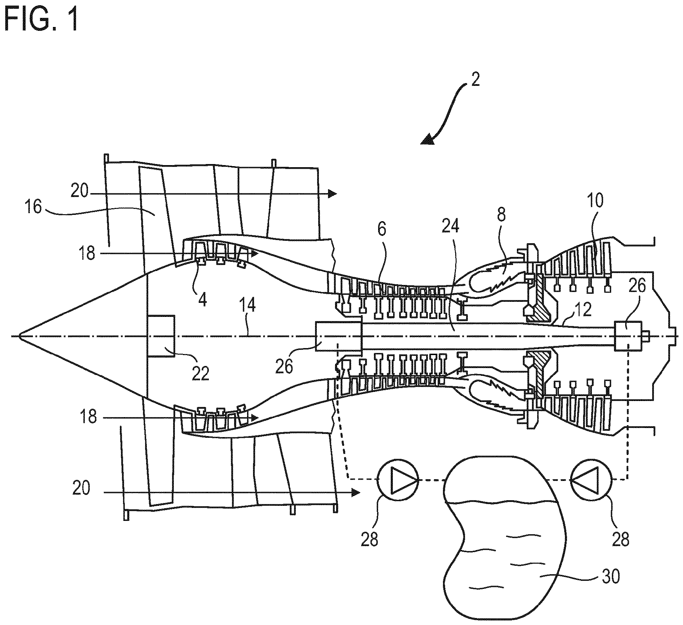

La figure 1 représente de manière simplifiée une turbomachine axiale. Il s'agit dans ce cas précis d'un turboréacteur double-flux. Le turboréacteur 2 comprend un premier niveau de compression, dit compresseur basse pression 4, un deuxième niveau de compression, dit compresseur haute pression 6, une chambre de combustion 8 et un ou plusieurs niveaux de turbines 10. En fonctionnement, la puissance mécanique des turbines 10 transmise via des arbres jusqu'au rotor 12 met en mouvement les deux compresseurs 4 et 6. Ces derniers comportent plusieurs rangées d' aubes de rotor associées à des rangées d'aubes de stators. La rotation du rotor autour de son axe de rotation 14 permet ainsi de générer un débit d'air et de comprimer progressivement ce dernier jusqu'à l'entrée dans la chambre de combustion 8.

Un ventilateur d'arrivée communément désigné fan ou soufflante 16 est couplé au rotor 12 et génère un flux d'air qui se divise en un flux primaire 18 traversant les différents niveaux sus mentionnés de la turbomachine, et un flux secondaire 20 traversant un conduit annulaire. Des moyens de démultiplication, tel un réducteur épicycloïdal 22, peut réduire la vitesse de rotation de la soufflante 16 et/ou du compresseur basse pression 4 par rapport au niveau de turbine 10 associé. Le flux secondaire 20 peut être accéléré de sorte à générer une réaction de poussée utile au vol d'un avion.

Les flux primaire 18 et secondaire 20 sont des flux annulaires et radialement concentriques. Leurs circulations progressives sont permises grâce à plusieurs rotors 12 avec des arbres 24 indépendants. Ces arbres 24 peuvent être coaxiaux et emmanchés l'un dans l'autre. Ils sont mobiles en rotation via des paliers 26 à leurs interfaces avec le carter de la turbomachine 2, ou même à l'aide de paliers à leurs interfaces inter-arbres.

Le refroidissement et/ou la lubrification des paliers 26 et de l'optionnel réducteur épicycloïdal 22 sont assurés par un circuit d'huile, éventuellement fermé. Ce circuit peut être propre à la turbomachine 2. Le circuit peut en outre alimenter des actionneurs tels des vérins (non représentés). Le circuit d'huile peut également comprendre un échangeur de chaleur (non représentés) pour refroidir l'huile. Les paliers 26 sont disposés dans des enceintes, généralement étanchéifiés grâce à des joints autour des arbres. Les enceintes permettent une lubrification des paliers 26 par aspersion d'huile. Au contact des paliers 26, l'huile se charge en air, si bien que l'huile récupérée est devenue un mélange air-huile liquide, par exemple avec au moins 1 % volumique d'air.

Les enceintes formant éventuellement des carters secs, sont munies d'orifices d'aspiration, également appelés orifices de drainage, en communication avec des pompes 28. Les pompes 28 peuvent être du type pompe volumétrique, par exemple pour maîtriser le débit. Le circuit d'huile peut ainsi comprendre plusieurs lignes de récupération d'huile convergeant vers un réservoir 30, éventuellement principal. Le réservoir 30 est également le point de départ de plusieurs lignes d'alimentation (non représentées) des paliers 26 et des divers équipements.

Le réservoir 30 peut être fixé à la nacelle de la turbomachine, ou à un carter de compresseur. Une fixation à un carter intermédiaire est envisageable. Le réservoir 30 peut être placé entre deux parois annulaires guidant des flux concentriques ; par exemple le flux secondaire 20 et le flux entourant la turbomachine, ou entre le flux primaire 18 et le flux secondaire 20. Afin d'augmenter son volume utile, le réservoir 30 est essentiellement allongé tout en suivant une forme générale courbe. Cette courbure permet une implantation entre deux cloisons courbes et rapprochées. Le réservoir peut notamment être à proximité d'une source chaude, sa température peut atteindre 100°C ; en plus d'être exposé aux vibrations de la turbomachine.

Aussi, le fonctionnement de la turbomachine implique une usure des paliers 26 et des pompes 28. Cette usure libère des particules métalliques dans le circuit de lubrification. Ces particules se retrouvent également dans l'huile du réservoir, et peuvent modifier les propriétés électriques de l'huile.

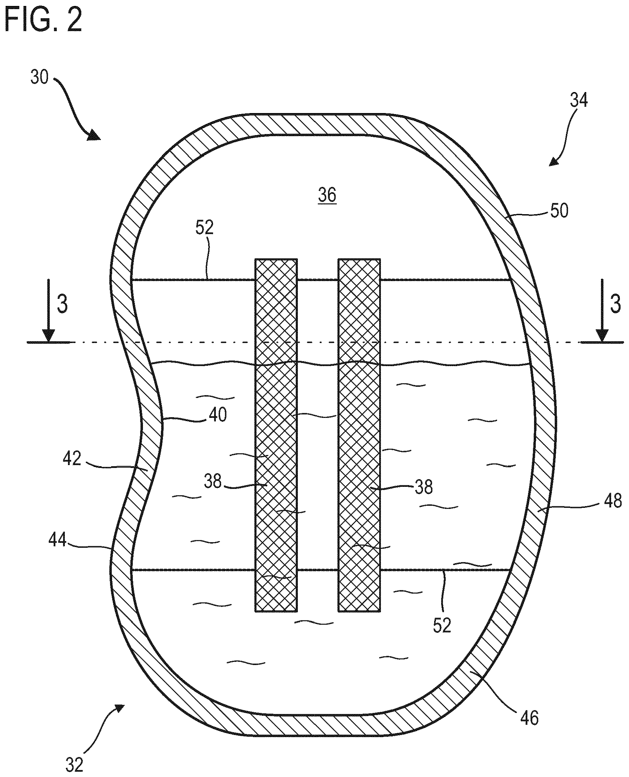

La figure 2 est une vue en coupe d'un réservoir 30 d'huile tel que celui de la figure 1.

Le réservoir 30 est partiellement rempli d'huile. Sa partie inférieure 32 contient un mélange d'huile, d'air et d'impuretés ; telles les particules métalliques relâchées par l'usure. Sa partie supérieure 34 peut contenir de l'air, ou du moins une phase essentiellement gazeuse. Afin de contrôler le niveau de liquide dans le réservoir 30, ce dernier est muni d'un dispositif de mesure de niveau dans la chambre intérieure 36 du réservoir 30. La chambre intérieure 36 peut être la chambre principale du réservoir 30. L'aspect principal est entendu dans le sens où il s'agit du plus grand réceptacle du réservoir.

Le dispositif est de type capacitif. Il comporte au moins une électrode 38, ou deux électrodes 38 placées dans la chambre intérieure 36 et en contact électrique de l'huile. Les électrodes baignent dans l'huile. Par mesure de la capacité électrique de l'huile, il est possible d'en déterminer le volume ; ou la masse ; présente à l'intérieur du réservoir 30. L'huile devient alors un condensateur électrique.

Le dispositif de mesure peut également utiliser des données fournies par un module de détection des particules métalliques contenues dans l'huile. Le dispositif peut estimer et corriger le niveau d'huile mesuré en fonction de l'influence des particules métalliques contenues dans l'huile. L'importance de la phase gazeuse présente dans l'huile peut également être prise en compte.

Les électrodes 38 forment partiellement la surface interne 40 du réservoir 30, cette surface interne étant également matérialisée par la paroi 42 du réservoir 30. Cette paroi 42 forme la structure du réservoir 30, elle en dessine le volume de stockage et la surface extérieure 44. Elle peut recevoir des pattes de fixation à la structure de la turbomachine.

Les électrodes 38 peuvent former deux rubans parallèles. Elles peuvent être de même longueur, de même largeur, et de même épaisseur. La longueur peut correspondre à la hauteur des électrodes. Leur hauteur peut représenter au moins 10% de la hauteur du réservoir 30, ou la majorité de la hauteur du réservoir. Elles peuvent balayer la majorité de la hauteur du volume utile du réservoir, et/ou toute la hauteur de la zone dans laquelle le niveau de liquide évolue. Ceci vise à améliorer la précision de mesure.

La paroi 42 peut comprendre une portion inférieure 46, une portion centrale 48 et une portion supérieure 50. Ces parties peuvent être soudées les unes aux autres, par exemple avec des cordons de soudure 52 formant des boucles. Chacune de ces portions peuvent être venues de matière. En alternative la portion centrale peut être produite à partir d'une tôle. La portion centrale est facultative car les portions inférieure et supérieure peuvent être directement liées l'une à l'autre.

Le réservoir 30 peut comprendre d'autres équipements. Par exemple, il peut comprendre des orifices d'entrée et de sortie (non représentés). Un bouchon (non représenté) peut être placé en partie supérieure, par exemple à son sommet. Un déserteur, un évent, et/ou un déshuileur (non représentés) peuvent être associés au réservoir 30. Des clapets et des vannes peuvent également être associés à l'entrée et/ou à la sortie.

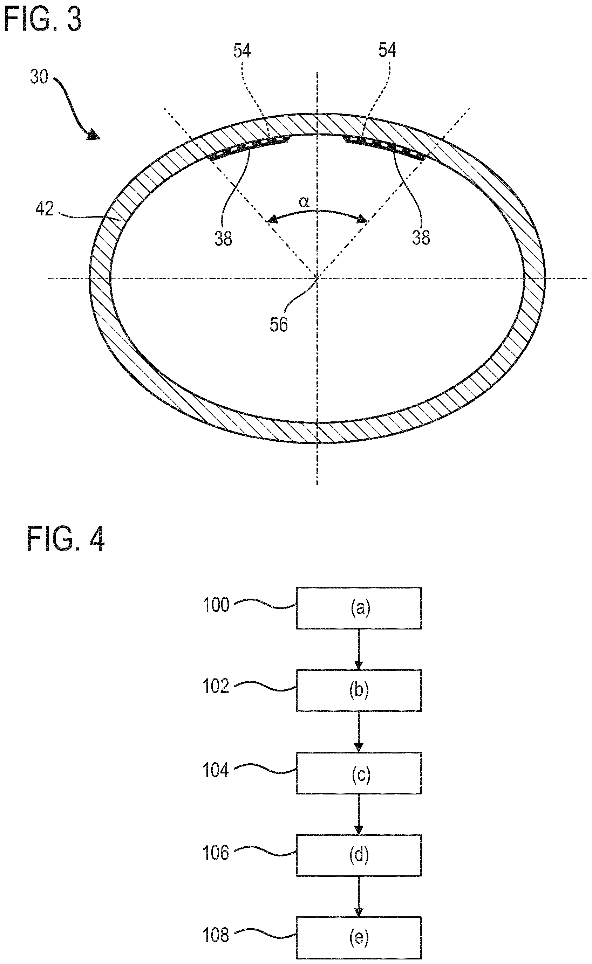

La figure 3 représente une coupe du réservoir 30 selon l'axe 3-3 tracé sur la figure 2. Les électrodes 38 sont ici représentées en coupe. Elles occupent une face creuse de la paroi 42.

Dans la mesure où la paroi 42 peut être réalisée en un matériau électriquement conducteur, une ou plusieurs couches isolantes 54 peuvent être prévues. Chaque couche isolante 54 isole électriquement la paroi 42 des électrodes. Elles coupent le contact aux interfaces paroi - électrode. L'épaisseur de la paroi 42 est supérieure à l'épaisseur de chaque électrode 38. L'épaisseur de ces dernières peut être inférieure ou égale à 0,10 mm. La paroi 42 et les électrodes 38 peuvent former un laminé, également appelé empilement. Ce laminé est optionnellement complété par les couches isolantes 54, par exemple aux interfaces.

Les deux électrodes 38 peuvent être essentiellement rapprochées. Elles peuvent être placées dans un secteur angulaire formant une fraction de tour du réservoir 30. Le secteur angulaire peut être mesuré par rapport à un axe vertical 56 au centre du réservoir 30. Le secteur angulaire renfermant les électrodes 38 peut avoir un angle α inférieur ou égal à 90°.

Suivant une variante de l'invention, seule une électrode est placée dans le réservoir, le dispositif utilisant la paroi métallique du réservoir comme autre électrode.

De manière générale, la paroi peut être réalisée en un matériau différent du ou des matériaux de la ou de chaque électrode. De manière générale, la ou chaque électrode peut être portée et/ou peut être appliquée contre la paroi ; et/ou peut être en contact de la paroi. De manière générale, la ou chaque couche électriquement isolante peut être en contact de la paroi et de la ou de chaque électrode. De manière générale, le réservoir peut présenter une continuité de matière à l'interface entre la paroi et la ou chaque électrode. De manière générale, la surface interne peut présenter une épaisseur ou des épaisseurs constante(s) au niveau de la ou de chaque électrode. De manière générale, la paroi et la ou chaque électrode forme un ou plusieurs laminé(s), éventuellement en combinaison de la ou des ou de chaque couche isolante.

La figure 4 est un diagramme d'un procédé de fabrication d'un réservoir. Le réservoir peut correspondre au réservoir décrit en relation avec les figures 1 à 3.

Le procédé peut comprendre les étapes suivantes, éventuellement réalisées dans l'ordre qui suit :
(a) réalisation 100 d'une paroi de réservoir formant au moins partiellement une chambre intérieure destinée à renfermer un liquide, la paroi pouvant être réalisée en plusieurs portions ;
(b) impression 102 d'une ou de plusieurs électrodes de dispositif capacitif de mesure du niveau du liquide contre la face interne de la paroi du réservoir ;
(c) soudure 104 des portions de la paroi de sorte à clore la chambre intérieure ;
(d) usinage 106 du réservoir pour réaliser des surfaces de fixation, des branchements, qui sont notamment à distance des électrodes ;
(e) branchement 108 électrique des électrodes en dehors du réservoir.

Lors de l'étape (a) réalisation 100, la paroi peut être réalisée au moins partiellement par fabrication additive par couches, notamment à base de poudre. La paroi peut être réalisée en plusieurs portions qui sont soudées les unes aux autres lors de l'étape (c) soudure 104 afin de former un ensemble étanche. Par ce procédé il est possible de réaliser des formes complexes. La paroi peut être produite en métal, par exemple de l'acier, et/ou avec des alliages d'aluminium ou de titane.

L'étape (b) impression 102 utilise encre électriquement conductrice, notamment avec des pigments électriquement conducteurs. L'encre employée permet de réaliser des électrodes contenant du cuivre et/ou de l'argent, et/ou du nickel et/ou du platine, et/ou un oxyde de graphène, et/ou un oxyde de graphite, et/ou des polymères organiques. Ces matériaux présentent une résistance à la corrosion utile dans le contexte d'une huile moteur de turboréacteur ; notamment en raison de la présence d'additifs corrosifs.

Selon une option de l'invention, les étapes (a) réalisation 100 et (b) impression 102 sont réalisées simultanément. Par exemple, la paroi peut être réalisée par impression en trois dimensions, tout comme les électrodes. Les couches de matière formant les électrodes peuvent être réalisées selon le même avancement que les couches qui construisent progressivement la paroi.

Le présent enseignement a été détaillé en relation avec un réservoir d'huile. Toutefois, cet enseignement peut également s'appliquer à un réservoir de carburant ; ou à tout autre réservoir de la turbomachine recevant un autre liquide nécessaire à la turbomachine.

## Revendications

1. Réservoir (30) de turbomachine (2), le réservoir (30) étant destiné à contenir un liquide de la turbomachine, notamment de l'huile, le réservoir (30) comprenant :
- une chambre intérieure (36) destinée à contenir le liquide du réservoir (30);
- une paroi (42) avec une surface interne (40) entourant la chambre intérieure (36) ; et
- un dispositif capacitif de mesure de niveau du liquide ;
**caractérisé en ce que**
le dispositif comprend deux électrodes (38) formant au moins partiellement la surface interne (40) et destinées à être en contact électrique du liquide de sorte à en mesurer le niveau.

2. Réservoir (30) selon la revendication 1, **caractérisé en ce que** la surface interne (40) présente une portion délimitée par les deux électrodes (38); ladite portion s'étendant majoritairement verticalement.

3. Réservoir (30) selon l'une des revendications 1 à 2, **caractérisé en ce qu'**il comprend un secteur angulaire renfermant chaque électrode (38) du dispositif, l'angle α du secteur angulaire étant inférieur ou égal à 90°, ou à 45°, ou à 30°.

4. Réservoir (30) selon l'une des revendications 1 à 3, **caractérisé en ce qu'**il comprend une couche électriquement isolante (54) isolant la paroi (42) de chaque électrode (38).

5. Réservoir (30) selon l'une des revendications 1 à 4, **caractérisé en ce que** la paroi (42) comprend une soudure (52) autour de la chambre intérieure (36).

6. Réservoir (30) selon l'une des revendications 1 à 5, **caractérisé en ce que** le réservoir (30) comprend une portion inférieure (46) et/ou une portion supérieure (50) séparée de chaque électrode (38) par une soudure (52).

7. Réservoir (30) selon l'une des revendications 1 à 6, **caractérisé en ce que** la paroi (42) comprend une tôle formant un compartiment généralement cylindrique dans lequel est disposée chaque électrode (38).

8. Turbomachine (2) comprenant un circuit de lubrification avec un réservoir (30) d'huile, **caractérisée en ce que** le réservoir (30) est conforme à l'une des revendications 1 à 7.

9. Turbomachine (2) selon la revendication 8, **caractérisée en ce que** le dispositif est adapté pour mesurer la capacité électrique du fluide à l'aide de chaque électrode (38).

10. Turbomachine (2) selon l'une des revendications 8 à 9, **caractérisée en ce que** le circuit de lubrification comprend un module de détection de particules solides dans l'huile, ledit module de détection de particules étant configuré pour estimer la quantité de particules dans le réservoir (30), le dispositif capacitif fournissant une mesure de niveau en fonction de la quantité de particules estimée.

11. Procédé de réalisation d'un réservoir (30) de turbomachine, notamment d'un réservoir (30) d'huile, le procédé comprenant les étapes suivantes :
(a) réalisation (100) d'une paroi (42) de réservoir (30) formant au moins partiellement une chambre intérieure (36) destinée à renfermer un liquide ;
**caractérisé en ce que** le procédé comprend en outre une étape
(b) impression (102) d'une électrode (38) de dispositif capacitif de mesure du niveau du liquide contre la paroi (42) du réservoir (30);
le réservoir (30) étant conforme à l'une des revendications 1 à 7.

12. Procédé selon la revendication 11, **caractérisé en ce que** lors de l'étape (a) réalisation (100), la paroi (42) est réalisée au moins partiellement par fabrication additive par couches, notamment à base de poudre.

13. Procédé selon l'une des revendications 11 à 12, **caractérisé en ce que** l'étape (b) impression (102) utilise une encre électriquement conductrice, notamment avec des pigments électriquement conducteurs.

14. Procédé selon l'une des revendications 11 à 13, **caractérisé en ce que** chaque électrode (38) comprend du cuivre et/ou de l'argent, et/ou du nickel et/ou de platine, et/ou un oxyde de graphène, et/ou un oxyde de graphite, et/ou des polymères organiques.

## Patentansprüche

1. Tank (30) für eine Turbomaschine (2), wobei der Tank (30) dazu gestaltet ist, eine Flüssigkeit der Turbomaschine, insbesondere Öl, zu enthalten, wobei der Tank umfasst:
- eine innere Kammer (36), die dazu gestaltet ist, die Flüssigkeit in dem Tank (30) zu enthalten,
- eine Wand (42) mit einer inneren Oberfläche, die die innere Kammer (36) umgibt, und
- eine kapazitive Vorrichtung zum Messen des Flüssigkeitsniveaus,
**gekennzeichnet dadurch, dass**
die Vorrichtung zwei Elektroden (38) umfasst, die zumindest zum Teil die innere Oberfläche (40) ausbilden und dazu gestaltet sind, in elektrischem Kontakt mit der Flüssigkeit zu sein, um das Niveau der Flüssigkeit zu messen.

2. Tank gemäß Anspruch 1, **gekennzeichnet dadurch, dass** die innere Oberfläche (40) einen Anteil hat, der von den beiden Elektroden (38) begrenzt ist, wobei sich der besagte Anteil überwiegend vertikal erstreckt.

3. Tank gemäß einem der Ansprüche 1 oder 2, **gekennzeichnet dadurch, dass** er einen gewinkelten Bereich umfasst, der jede Elektrode (38) der Vorrichtung enthält, wobei der Winkel α des gewinkelten Bereiches gleich ist oder weniger ist als 90° oder 45 ° oder 30°.

4. Tank gemäß einem der Ansprüche 1 oder 3, **gekennzeichnet dadurch, dass** er eine elektrisch isolierende Schicht (54) umfasst, die die Wand (42) von jeder Elektrode (38) isoliert.

5. Tank gemäß einem der Ansprüche 1 oder 4, **gekennzeichnet dadurch, dass** die Wand (42) eine Schweißnaht (52) um die innere Kammer (36) herum umfasst.

6. Tank gemäß einem der Ansprüche 1 oder 5, **gekennzeichnet dadurch, dass** der Tank (30) einen unteren Teil (46) und/oder einen oberen Teil (50) umfasst, der von jeder Elektrode (38) durch eine Schweißnaht (52) getrennt ist.

7. Tank gemäß einem der Ansprüche 1 oder 6, **gekennzeichnet dadurch, dass** die Wand (42) eine Metalllage umfasst, die eine im Wesentlichen zylindrische Kammer ausbildet, in der jede Elektrode (38) angeordnet ist.

8. Turbomaschine (2) umfassend einen Schmiermittelkreislauf mit einem Öltank (30), **gekennzeichnet dadurch, dass** der Tank (30) der Tank gemäß einem der Ansprüche 1 bis 7 ist.

9. Turbomaschine (2) gemäß Anspruch 8, **gekennzeichnet dadurch, dass** die Vorrichtung dazu gestaltet ist, die Kapazität der Flüssigkeit unter Verwendung jeder Elektrode (38) zu messen.

10. Turbomaschine (2) gemäß einem der Ansprüche 8 bis 9, **gekennzeichnet dadurch, dass** der Schmiermittelkreislauf ein Modul zum Detektieren von Feststoffpartikeln in dem Öl umfasst, wobei das Partikeldetektionsmodul dazu gestaltet ist, die Menge an Partikeln in dem Tank (30) abzuschätzen, wobei die kapazitive Vorrichtung eine Niveaumessung als Funktion der Menge an abgeschätzten Partikeln bereitstellt.

11. Verfahren zum Herstellen eines Turbomaschinentanks (30), insbesondere eines Öltanks (30), wobei das Verfahren die folgenden Schritte umfasst:
(a) Herstellen (100) einer Wand (42) eines Tanks (30), die zumindest einen Teil einer inneren Kammer (36) ausbildet, die dazu gestaltet ist, eine Flüssigkeit zu enthalten,
**gekennzeichnet dadurch, dass** das Verfahren auch den folgenden Schritt umfasst
(b) Drucken (102) einer Elektrode einer kapazitiven Vorrichtung (38) zum Messen des Niveaus der Flüssigkeit auf der Wand (42) des Tanks (30),
wobei der Tank (30) möglicherweise der Tank gemäß einem der Ansprüche 1 bis 7 ist.

12. Verfahren gemäß Anspruch 11, **gekennzeichnet dadurch, dass** während des Herstellungsschrittes (a) (100) die Wand (42) zumindest zum Teil durch additive Schichtfertigung gemacht wird, insbesondere pulverbasierte additive Schichtfertigung.

13. Verfahren gemäß einem der Ansprüche 11 bis 12, **gekennzeichnet dadurch, dass** der Druckschritt (b) (102) eine elektrisch leitfähige Tinte verwendet wird, insbesondere mit elektrisch leitfähigen Pigmenten.

14. Verfahren gemäß einem der Ansprüche 11 bis 13, **gekennzeichnet dadurch, dass** jede Elektrode (38) Kupfer und/oder Silber und/oder Nickel und/oder Platin und/oder Graphenoxid und/oder Graphitoxid und/oder organische Polymere umfasst.

## Claims

1. Tank (30) for a turbomachine (2), the tank (30) being designed to contain a liquid of the turbomachine, notably oil, the tank (30) including:
- an inner chamber (36) designed to contain the liquid in the tank (30),
- a wall (42) with an inner surface (40) surrounding the inner chamber (36), and
- a capacitive device for measuring liquid level,
**characterized in that**
the device includes two electrodes (38) forming at least partly the inner surface (40) and designed to be in electrical contact with the liquid in order to measure the level of the liquid.

2. Tank (30) according to claim 1, **characterized in that** the inner surface (40) has a portion delimited by the two electrodes (38), said portion extending mostly vertically.

3. Tank (30) according to one of claims 1 to 2, **characterized in that** it includes an angular sector containing each electrode (38) of the device, the angle α of the angular sector being equal to or less than 90° or 45° or 30°.

4. Tank (30) according to one of claims 1 to 3, **characterized in that** it includes an electrically insulating layer (54) insulating the wall (42) from each electrode (38).

5. Tank (30) according to one of claims 1 to 4, **characterized in that** the wall (42) includes a weld (52) around the inner chamber (36).

6. Tank (30) according to one of claims 1 to 5, **characterized in that** the tank (30) includes a lower portion (46) and/or an upper portion (50) that is separated from each electrode (38) by a weld (52).

7. Tank (30) according to one of claims 1 to 6, **characterized in that** the wall (42) includes a metal sheet forming a substantially cylindrical compartment in which is located each electrode (38).

8. Turbomachine (2) including a lubrication circuit with an oil tank (30), **characterized in that** the tank (30) is the tank according to one of claims 1 to 7.

9. Turbomachine (2) according to claim 8, **characterized in that** the device is designed to measure the capacitance of the fluid using each electrode (38).

10. Turbomachine (2) according to one of claims 8 to 9, **characterized in that** the lubrication circuit includes a module for detecting solid particles in the oil, the particle detection module being designed to estimate the quantity of particles in the tank (30), the capacitive device providing a level measurement as a function of the quantity of estimated particles.

11. Method for manufacturing a turbomachine tank (30), notably an oil tank (30), the method including the following steps:
(a) manufacturing (100) a wall (42) of a tank (30) forming at least part of an inner chamber (36) designed to contain a liquid,
**characterized in that** the method also includes the following step:
(b) printing (102) an electrode of a capacitive device (38) for measuring the level of the liquid on the wall (42) of the tank (30),
the tank (30) possibly being the tank according to one of claims 1 to 7.

12. Method according to claim 11, **characterized in that** during the manufacturing step (a) (100), the wall (42) is made at least in part by additive layer manufacturing, notably powder-based additive layer manufacturing.

13. Method according to one of claims 11 to 12, **characterized in that** the printing step (b) (102) uses an electrically conductive ink, notably with electrically conductive pigments.

14. Method according to one of claims 11 to 13, **characterized in that** each electrode (38) includes copper and/or silver and/or nickel and/or platinum and/or graphene oxide and/or graphite oxide and/or organic polymers.
